# EUROPEAN PATENT APPLICATION

(11) **EP 1 480 378 A1**
(43) Date of publication of application: **24.11.2004**
(21) Application number: 03291225.5
(22) Date of filing: 23.05.2003
(51) Int. Cl.: H04L 12/24

(54) **Method for setting up a generic protocol relationship between network elements in a telecom network**

(71) Applicant: ALCATEL, 75008 Paris (FR)
(72) Inventor: Canali, Massimo, 20059 Vimercate ( Milano) (IT); Mussini, Marco, 20133 Milano (IT); Volontè, Stefano, 20052 Monza (Milano) (IT)
(74) Representative: Menzietti, Domenico

(57) **Abstract**

The present invention provides for a method for having the same interface family used to connect all possible kinds of network elements in a telecom network, by creating a CSG (CORBA Strategy Gateway) interface between Common Element Manager and Network Manager layers, to be protocol independent because, irrespective of the protocol used, the services provided are always the same. This generic layer will be used as a syntactical adaptation between NM and NE without taking into account the semantic of the exchanged messages.

## Description

The present invention relates to a method for setting up a generic protocol relationship between network elements (a manager NM and an agent NE), in a telecom network.

The services related to a network management layer (NML) are usually not dependent from the protocol used to communicate with network elements NEs.

Typically a network manager (NM) application uses a dedicated interface for each family of NEs depending from the protocol type.

When a manager/agent relationship has to be defined, the operations permitting these connections are the same over different management protocols.

Every management protocol has its own syntax to define these operations. For example for SNMP, GET request from manager to agent in order to retrieve specific object values, SET of the same object to change their value, etc..

The existing Telecom architectures use an "adaptation" approach for setting up a protocol relationship between network elements, but the adaptation layers as well as their application-programming interfaces (APIs) are dependent on the protocol used.

Therefore there is a need to find a way to have the same interface family used to connect all possible kinds of network elements with different protocols.

Therefore the main object of the present invention is to provide a method and apparatus for having the same interface family used to connect all possible kinds of network elements.

This object is achieved by creating an interface between element management layer (EML) and network management layer (NML) to hide the different protocols at NM side. This can be done by developing appropriate support in EML layer, without losing of functionality in NML layer, because typically it is the EML that has in charge the management of the particularity of the NE protocols.

The basic idea of the present invention is to create a CSG (CORBA Strategy Gateway) interface between Common Element Manager and Network Manager layers, to be protocol independent because, irrespective of the protocol used, the services provided are always the same.

This generic layer will be used as a syntactical adaptation between NM and NE without taking into account the semantic of the exchanged messages. For this reason, the adaptation layer will be completely model-independent.

These and further objects are achieved by means of an apparatus and method as described in the attached claims, which are considered an integral part of the present description.

The invention will become fully clear from the following detailed description, given by way of a mere exemplifying and non limiting example, to be read with reference to the attached drawing figures, wherein:
- Fig. 1 shows a block diagram of the system in accordance with the invention;
- Fig. 2 shows a logical information flow for the described embodiment example of the invention.

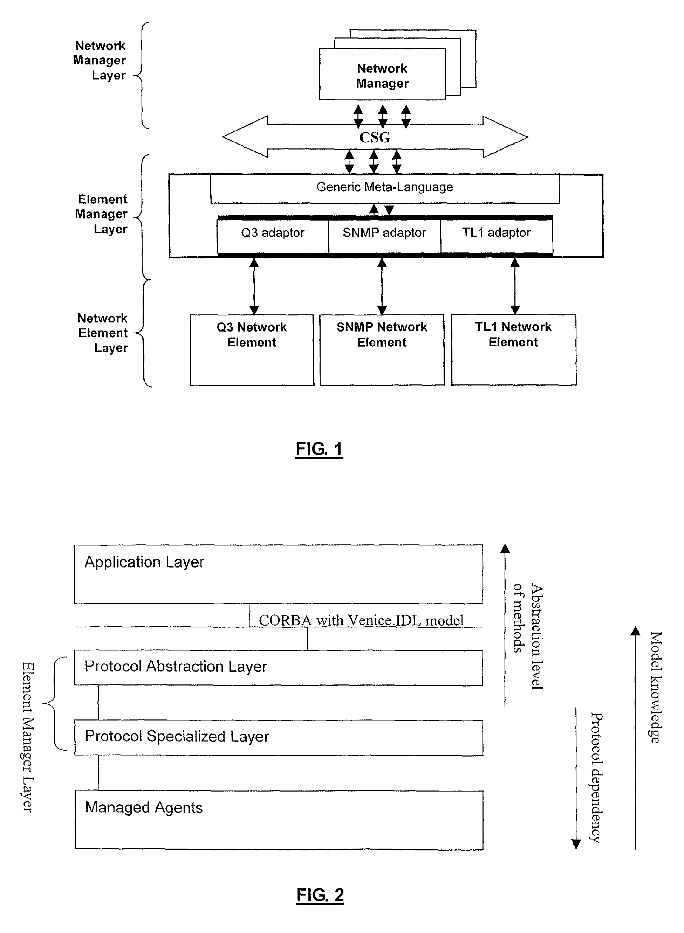

In figure 1 a whole architectural scheme is shown, highlighting the relationship among the different network layers.

A CSG (CORBA Strategy Gateway) interface is created between Common Element Manager and Network Manager layers, to be protocol independent, because, irrespective of the protocol used, the services provided are always the same.

This generic layer will be used as a syntactical adaptation between NM and NE without taking into account the semantic of the exchanged messages.

The CSG interface is composed by a number of generic methods hiding different protocol operations.

These methods describe the common operations, such as GET, SET, CREATE, DELETE, of the protocol used for NE TMN communication (SNMP, CORBA, TL1, Q3).

Furthermore, CSG provides also a method for managing EML common services, such as alarm and NE management.

The methods will be defined using CORBA IDL language (Interface Data Language) and they have, as parameters, common meta-language commands, for example the XML commands, written in the known XML language.

In a preferred embodiment, the creation of the CSG interface starts from checking which are the operations permitted by each single protocol used in the Telecom network element portfolio and which are the specific characteristics for each language.

Starting from these considerations, it has been decided to have an approach in which the minimal functionality provided by the more complex protocols, CMIP and SNMP, are offered. These functionalities are defined in the Corba Strategy Gateway (CSG) interface.

The CSG interface mainly contains generic GET and SET methods.

The usage of these two operations will mask, as much as possible, the potentiality of each protocol.

This means that, for example, a GET of an object may actually result in an Action in a SNMP environment, starting from a Network Element or it will be converted in an action request from the manager interface in case of CMIP.

Furthermore the interface defines some general NE functionality for the NE entity management.

These functionality mainly concern the alarm, addressing, NE configuration and performance monitoring management.

These features are also independent from the protocol and they are defined in the NMD part of the CSG interface.

In the following it is described an application example of the CSG interface definition. The inputs are the methods of the most used telecom protocol languages, while the output describes the same methods expressed in the protocol independent interface meta-language (named Venice.idl).

The following table describes the different protocol-specific methods taking care of the two way communication present in the protocol:
■ between manager to agent as southbound request
■ between agent to manager as northbound spontaneous events

| **Protocol** | **Method (Southbound)** | **Method (Northbound)** | **Argument** | **additionalInfo** |
|---|---|---|---|---|
| CMIP | GET | EVENTREPORT | MOC+MOI | Filtering |
| | SET | | | Scoping |
| | CREATE | + replies | | |
| | DELETE | | | |
| | ACTION | | | |
| SNMP | GET | TRAP | OID+INDEX | |
| | GETNEXT | + | | |
| | GETBULK | replies | | |
| | SET | | | |
| CORBA | model dep. | model dep. | alfa.bravo.charlie | |
| | | | | |
| TL1 | model dep. | model dep. | | |
| CLI | model dep. | model dep. | | |

A non limiting example of possible translation of the above methods is depicted below ; it is splitted into Southbound and Northbound interfaces to maintain the input structure concepts.

### SOUTHBOUND VENICE.IDL

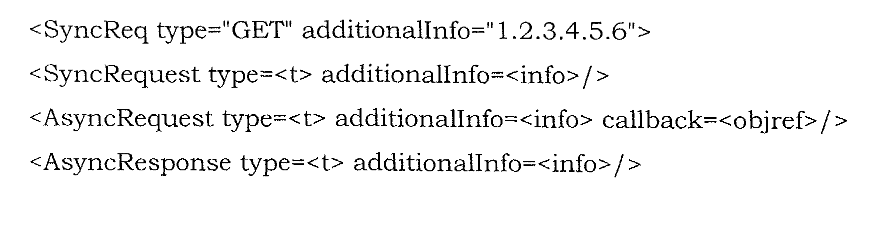

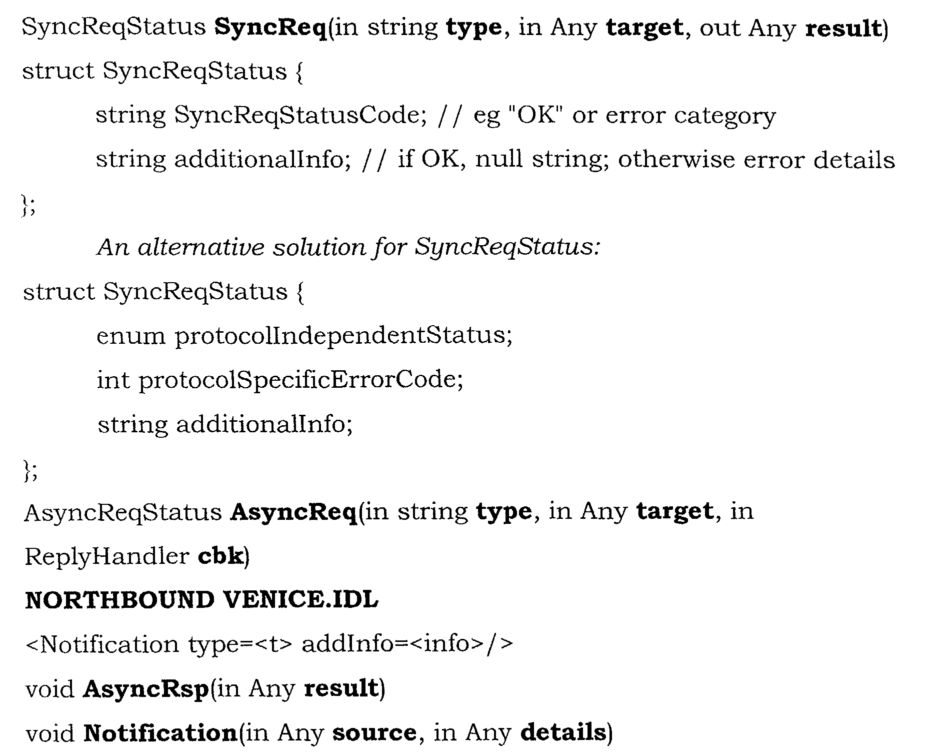

The example above shows a way to translate the received input, in a language-specific grammar, into a condensed generic language (e.g., XML) that could be read by the upper layer client (Network Manager) without taking care of the specific management protocol of the underlying layers (Network Elements).

In Fig. 2 the logical information flow is shown, as implied in the independent two way communications.

At the level of Managed Agents there is a complete knowledge of the protocol used, but there is no knowledge of the model, and the Network Element is managed object by object.

At the level of Protocol Specialized Layer and Protocol Abstraction Layer ther is a complete knowledge of the NE model, but there is no knowledge of the protocol used.

Indeed the protocol dependent layers do not touch the Network Manager layer, while the method abstractions is relevant for the upper layers of Element Managers and for the Network Manager layer.

The advantages obtained by the present invention are that the NM layer can be completely protocol independent. Hence, any CSG interface can be used to manage all the technologies without specific changing. Moreover in order to add a new NE protocol no impact is expected, in general, at EML interface layer.

Model dependencies will of course remain, because the managed entities are different and they have different semantics and behavior, however protocol dependencies will mostly, if not entirely, disappear, from a NML point of view. The fact that the management protocol actually understood by the managed entity is kept transparent to the manager application means that most software technology, third party tools and programming techniques used for the development of management applications can remain stable over time for a broad range of devices, with benefits in terms of development time and effort and especially code reusability, which in turn can have positive effects on software quality.

Further implementation details will not be described, as the man skilled in the art is able to carry out the invention starting from the teaching of the above description.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

## Claims

1. Method for setting up a generic protocol relationship between network elements, namely a Network Manager (NM) and a Network Element agent (NE), in a telecom network, **characterized in that**
an interface (CSG) is created between Common Element Manager and Network Manager layers, to be protocol and model independent, as a generic layer for syntactical adaptation between Network Manager and Network Element, without taking into account the semantic of the exchanged messages;
said interface (CSG) being composed by a number of generic methods hiding different protocol operations.

2. Method according to claim 1, **characterized in that** said generic methods:
describe common operations, such as GET, SET, CREATE, DELETE, of the protocol (SNMP, CORBA, TL1, Q3) used for communication between Network Manager and Network Element, .
also comprise a method for managing Network Element common services, such as alarm and NE management.

3. Method according to claims 1 or 2, **characterized in that** said Corba Strategy Gateway interface (CSG):
is created starting from checking which are the operations permitted by each single protocol and which are the specific characteristics for each language;
is defined as offering the minimal functionality provided by the more complex protocols, CMIP and SNMP, mainly containing generic GET and SET methods.

4. Method according to claim 3, **characterized in that** said methods are defined using CORBA IDL language (Interface Data Language), and have, as parameters, common meta-language commands, written in XML language.

5. Telecom network, comprising network elements, namely a Network Manager (NM) and Network Elements (NE), **characterized in that** it comprises means for the implementation of the methof of any of claims 1 to 4.

6. Computer program comprising computer program code means adapted to perform all the steps of claim 1 to 4 when said program is run on a computer.

7. A computer readable medium having a program recorded thereon, said computer readable medium comprising computer program code means adapted to perform all the steps of claim 1 to 4 when said program is run on a computer.
